# FASCICULE DE BREVET EUROPEEN

(11) **EP 2 197 800 B1**
(45) Date de publication et mention de la délivrance du brevet: **13.01.2016**
(21) Numéro de dépôt: 08864260.8
(22) Date de dépôt: 06.10.2008
(51) Int. Cl.: C02F 3/30, C02F 3/00

(54) **PROCEDE DE TRAITEMENT D'EFFLUENTS CONTENANT DE L'AZOTE DANS UN REACTEUR BIOLOGIQUE SEQUENTIEL**
VERFAHREN ZUR BEARBEITUNG STICKSTOFFHALTIGER EFFLUENZEN IN EINEM SEQUENCING-BATCH-REAKTOR
METHOD FOR THE TREATMENT OF EFFLUENTS CONTAINING NITROGEN IN A SEQUENCING BATCH REACTOR

(30) Priorité: 09.10.2007 FR 0707080
(43) Date de publication de la demande: 23.06.2010
(73) Titulaire: DEGREMONT, 92500 Rueil-Malmaison (FR)
(72) Inventeur: GONZALEZ OSPINA, Adriana, F-78230 Le Pecq (FR)
(74) Mandataire: Cabinet Armengaud Aîné
(86) Numéro de dépôt international: PCT/FR2008/001394
(87) Numéro de publication internationale: WO 2009/080912

(56) Documents cités:
- WO-A-98/34878
- DE-A1- 19 827 877
- US-A1- 2002 117 445

## Description

L'invention est relative à un procédé de traitement d'effluents contenant de l'azote sous forme d'ammonium, mettant en oeuvre un réacteur biologique séquentiel, procédé comprenant
- une première étape aérée, au cours de laquelle a lieu une oxydation totale ou partielle de l'ammonium en nitrites,
- suivie d'une deuxième étape non aérée au cours de laquelle les nitrites produits et l'ammonium sont convertis en azote gazeux ,
procédé selon lequel une pression de sélection bactérienne, favorable au développement et à l'activité des bactéries nitritantes, est exercée pour réaliser dans le même réacteur et de manière alternée les deux étapes de traitement, et est réalisée par des à-coups ou pics de charge ammoniacale grâce à l'introduction successive des fractions volumiques connues de l'effluent à traiter dans le réacteur biologique,
un volume d'effluent à traiter dans un cycle complet étant versé dans le réacteur par fractions volumiques successives, le cycle complet de traitement étant divisé en sous-cycles successifs, chaque sous-cycle comprenant une phase d'alimentation par une fraction volumique, puis une phase d'aération pour provoquer la nitritation, puis une phase d'anoxie pendant laquelle l'aération est arrêtée.

Un procédé du genre défini précédemment est connu d'après la demande de brevet FR 2 889 180 A1. Le procédé visé par ce document permet de transformer l'ammonium de manière quasi-exclusive en nitrites pendant une première phase oxydative aérée, avant passage en azote gazeux pendant une deuxième phase de dénitrification anoxie. Toutefois la deuxième phase correspond à une réduction hétérotrophe des nitrites en azote gazeux et nécessite l'apport d'un substrat carboné facilement biodégradable, généralement introduit sous forme de méthanol ou d'éthanol, entraînant un coût d'exploitation qu'il est souhaitable de réduire.

L'invention concerne plus particulièrement le traitement des eaux d'origine urbaine, industrielle ou agroalimentaire, ou des rejets aqueux provenant de la déshydratation de boues digérées, du traitement de boues par oxydation humide, des condensats de séchage de boues, des lixiviats des décharges, des lisiers, ou toute installation devant traiter une eau contenant de l'ammonium quelle que soit sa concentration et sa température.

L'absence de contrôle sur la qualité des rejets d'eau issus de l'activité humaine, agricole ou industrielle peut engendrer, à court ou long terme, des nuisances majeures sur la santé et sur l'environnement. Pour préserver le milieu naturel, des réglementations plus sévères sont imposées pour limiter principalement les rejets en azote et en phosphore.

Dans les stations d'épuration, les pollutions carbonées et azotées des eaux usées sont principalement éliminées par voie biologique. Cette voie conventionnelle repose sur la capacité de micro-organismes à éliminer la pollution par assimilation et par biodégradation, selon différents procédés résumés ci-après.

### 1/ Nitrification conventionnelle

Dans le cas de l'azote, on distingue essentiellement les traitements par nitrification et dénitrification. Lors de la nitrification, l'ammonium est oxydé en conditions aérées par des bactéries autotrophes selon deux étapes : d'abord en nitrites par des bactéries dites oxydatrices de l'ammonium AOB (Ammonium-Oxidizing Bacteria), puis en nitrates par des bactéries dites oxydatrices des nitrites NOB (Nitrite-Oxidizing Bacteria). Durant la dénitrification, les nitrates produits sont finalement réduits en azote gazeux en conditions d'anoxie par un consortium de bactéries hétérotrophes, nécessitant du carbone facilement biodégradable.

La contrainte majeure liée au traitement conventionnel de l'azote par nitrification et dénitrification est causée notamment par :
- les forts besoins en oxygène pour l'oxydation de l'ammonium en nitrates (4.57 mgO₂/mgN)
- la nécessité de volumes réactionnels importants pour maintenir un âge de boues élevé et permettre le développement des micro-organismes nitrifiants à faible taux de croissance,
- l'absence ou la limitation en carbone biodégradable disponible pour la dénitrification qui impose l'utilisation d'une source externe de réactif carboné avec des besoins élevés (2.86 mgC/mgN)

Le surcoût de ce traitement conventionnel est notamment pénalisant lorsque les effluents à traiter sont caractérisés par des ratios typologies DCO/N faibles (DCO = demande chimique d' oxygène ; N = azote).

### 2/ Nitrification partielle ou Nitritation = Shunt des nitrates

Pour minimiser l'impact du traitement par voie biologique conventionnelle, la nitrification partielle et la dénitrification hétérotrophe à partir de nitrites a été proposée et décrite dans EP 0 826 639 A1 et FR 2 889 180 A1, déjà cité. Ce traitement appelé également Shunt des nitrates, permet de transformer l'ammonium en nitrites pendant une première phase oxydative aérée, puis de passer directement en azote gazeux pendant une deuxième phase de dénitrification anoxie. L'accumulation des nitrites est obtenue grâce au maintien des conditions opérationnelles telles que les faibles concentrations en oxygène dissous, le pH, une température élevée et des fortes concentrations en ammonium. C'est pourquoi initialement ce type de traitement a été proposé pour des effluents concentrés de type centrats de digestion.

Par rapport au traitement biologique conventionnel décrit précédemment, environ 25% de l'énergie d'aération, 40% des besoins en carbone biodégradable et 25% de la production de boues peuvent être économisés par ce type de traitement.

Les mécanismes décrits dans EP 0 826 639 A1 entraînent un lessivage spécifique de la biomasse responsable de l'oxydation des nitrites en nitrates (NOB) par l'utilisation d'un réacteur chemostat sans rétention de biomasse (débit de sortie égal au débit d'entrée) dans lequel l'âge de boues est fixé par le temps de séjour hydraulique. Le lessivage est en partie physique, par évacuation de la biomasse, et en partie dû à une inactivation des bactéries en raison des paramètres de fonctionnement.

En opposition à ce système, FR 2 889 180 A1 a montré l'intérêt d'utiliser les réacteurs biologiques séquentiels pour la nitrification partielle en introduisant des séquences de traitement spécifiques à durée limitée qui permettent d'exercer de manière stabilisée, par des pics ou des à coups de charge ammoniacale, une pression de sélection favorable au développement de la biomasse responsable de l'oxydation de l'ammonium en nitrites (AOB) et de traiter des charges plus importantes grâce à la rétention de biomasse dans le réacteur biologique séquentiel.

Dans les deux cas, la réduction hétérotrophe des nitrites en azote gazeux nécessite l'apport d'un substrat carboné facilement biodégradable pour avoir lieu.

### 3/ Nitritation et Réaction Anammox = déammonification

Pour limiter sensiblement l'utilisation de substrats carbonés exogènes, voire les réduire complètement, le traitement de l'azote est aussi possible grâce à une réaction entièrement autotrophe dans laquelle l'oxydation de l'ammonium a lieu en utilisant les nitrites comme accepteurs d'électrons dans des conditions d'anoxie stricte.

Dans cette solution, appelée également « déammonification », il est nécessaire d'oxyder d'abord une partie de l'ammonium en nitrites (par nitritation) puis de provoquer la réaction de déammonification à partir de l'ammonium restant et des nitrites produits pour former de l'azote gazeux (N₂). Le point sensible de cette réaction est le maintien d'un ratio stabilisé nitrites/ammonium durant la première étape de traitement. Les gains par rapport au traitement biologique conventionnel de l'azote sont associés aux économies sur les besoins en énergie d'aération qui sont réduits de 60% et au fait qu'il n'y a plus besoin de carbone facilement biodégradable pour la dénitrification.

Plusieurs mises en oeuvre ont été proposées pour cette application en utilisant un ou deux réacteurs (WO 00 5176 et EP 0 931 023 B1). Lorsque deux réacteurs sont utilisés pour effectuer le traitement, l'étape de nitritation est couramment réalisée dans un réacteur de type chemostat sans rétention de biomasse avec comme principale limite la stabilité de la production des nitrites qui ne peut pas être facilement garantie car elle dépend fortement dans ce système de la concentration en bicarbonates de l'effluent. De plus, les charges maximales admissibles par ce procédé sont limitées par un temps de séjour hydraulique de 1 à 2 jours.

Compte tenu des faibles taux de croissance des bactéries Anammox, la réaction de déammonification est mise en oeuvre dans des réacteurs fluidisés à biofilm ou dans des réacteurs biologiques séquentiels dans lesquels la rétention de biomasse est favorisée.

WO2007/033393 A1 décrit une méthode de régulation basée sur le pH avec laquelle il est possible de traiter l'azote en parallèle, ou de manière simultanée, par nitritation et déammonification dans un réacteur biologique séquentiel. Les cycles de traitement sont caractérisés par une alimentation continue durant les phases de réaction et par une aération intermittente contrôlée par le pH. Le fonctionnement de l'aération par intermittence est régulé en fonction des valeurs théoriques en pH pour lesquelles les variations minimales et maximales sont de 0.02 et 0.05 unités.

L'inconvénient de ce système réside dans la stratégie adoptée pour l'alimentation en effluent qui ne s'avère pas compatible avec la stabilité du ratio nitrites/ammonium (N-NO₂:N-NH₄) requis pour la déammonification et les vitesses réactionnelles typiques des bactéries AOB. Avec une alimentation continue, il est difficile de garantir un fonctionnement stabilisé. En effet, l'ajout continu d'ammonium paraît incompatible avec une conversion à hauteur de 50% de l'ammonium pendant la phase d'aération, et le maintien pendant toute la phase de non aération d'un ratio stable N-NO₂:N-NH₄. Cela est renforcé par le fait que l'étroite gamme de pH fixée pour réguler la durée de l'introduction ou de l'arrêt de l'air conduira sensiblement vers des étapes irrégulières d'aération et d'anoxie qui potentiellement pourront conduire à des dysfonctionnements importants au cours du traitement.

### Exposé de l'invention

Pour pallier ces inconvénients, et de sorte à améliorer la solution décrite dans FR 2 889 180 A1, la présente invention propose de traiter les effluents contenant de l'ammonium par nitritation et déammonification dans un réacteur biologique séquentiel à cycles fractionnés dans lequel les phases de réaction en milieu aéré et non aéré ont une durée limitée et sont régulées en fonction au moins de la conductivité mesurée dans le réacteur biologique, et de préférence également de la concentration en oxygène dissous mesurée dans le réacteur.

Selon l'invention, le procédé de traitement d'effluents contenant de l'azote sous forme d'ammonium, mettant en oeuvre un réacteur biologique séquentiel, procédé selon lequel :
- un volume d'effluent à traiter dans un cycle complet est introduit par fractions volumiques successives dans le réacteur biologique, chaque fraction volumique étant traitée au cours d'un sous-cycle, l'introduction successive des fractions volumiques permettant d'exercer une pression de sélection bactérienne favorable au développement et à l'activité des bactéries nitritantes par des à-coups de charge ammoniacale,
- chaque sous-cycle comprend une phase d'alimentation par une fraction volumique et, de manière alternée, deux étapes de traitement, à savoir :
- une première étape aérée, au cours de laquelle a lieu une oxydation totale ou partielle de l'ammonium en nitrites,
- suivie d'une deuxième étape non aérée, en anoxie, au cours de laquelle les nitrites produits et l'ammonium sont convertis en azote gazeux,
est caractérisé en ce que :
- pendant la première étape aérée la concentration en oxygène dissous dans le réacteur biologique est maintenue entre 0.1 mgO₂/L et 0.6 mgO₂/L,
- le rapport N-NO₂ : N-NH₄ est ajusté pour être compris entre 0.9 et 1.5 au début de la deuxième étape non aérée,
- et l'étape non aérée est réalisée par déammonification, sans apport de substrat carboné.

De préférence, la première étape aérée est régulée en fonction au moins de la conductivité (X) mesurée dans le réacteur biologique. Avantageusement, la première étape aérée est régulée en fonction également de la concentration en oxygène dissous mesurée dans le réacteur biologique.

Pendant la première étape aérée la concentration en oxygène dissous peut être maintenue entre deux valeurs seuils par arrêt ou mise en marche de la fourniture d'air dans le réacteur biologique.

La durée de la première étape aérée est avantageusement contrôlée par la mesure de la conductivité (X) dans le réacteur biologique, et la fourniture en air est arrêtée si une valeur seuil (limite supérieure) en conductivité est atteinte avant une durée fixée.

Selon un premier mode opératoire, dans la première étape aérée une partie seulement du flux en ammonium apporté par un volume d'effluent à traiter est transformée en nitrites, la partie restante du flux en ammonium étant suffisante pour que, dans la deuxième étape non aérée, les nitrites produits et l'ammonium non oxydé lors de la première étape soient convertis en azote gazeux.

La partie du flux en ammonium transformée en nitrites à la fin de la première étape aérée est comprise entre 40 et 60% du flux apporté.

Selon un deuxième mode opératoire, au cours de la première étape aérée, le flux d'ammonium apporté par un volume d'effluent à traiter est complètement oxydé en nitrites, et au début de la deuxième étape non aérée, un apport supplémentaire en effluent à traiter contenant de l'ammonium est réalisé en proportion du flux de nitrites produits dans la première étape aérée pour que le ratio N-NO₂:N-NH₄ soit compris entre 0.9 et 1.5.

L'apport supplémentaire en effluent ammoniacal peut être réalisé en proportion sensiblement égale au flux des nitrites produits, de sorte que le ratio N-NO₂ :N-NH₄ soit sensiblement égal à 1.

L'apport supplémentaire en effluent ammoniacal à introduire au début de la deuxième étape non aérée est avantageusement déterminé en tenant compte d'un rendement d'oxydation de l'ammonium compris entre 75% et 98% et d'un ratio N-N02 :N-NH4 à maintenir pour la déammonification entre 0.9 et 1.5.

L'apport supplémentaire en effluent à introduire au début de la deuxième étape non aérée peut représenter entre 50% et 110% du volume d'effluent initial.

Le temps d'alimentation en effluent à traiter représente généralement 7 à 10 % de la durée totale du cycle de traitement.

Le nombre et la durée des sous-cycles et des phases des sous-cycles peuvent être ajustés grâce à une série de mesures en temps réel du débit, de l'oxygène dissous, de la conductivité et du pH dans l'effluent à traiter, dans le réacteur biologique et dans le rejet.

Le nombre de sous-cycles est généralement compris entre 2 et 8 par cycle.

La durée d'un cycle de traitement peut être comprise entre 4 et 8 heures.

La concentration en oxygène est mesurée en ligne dans le réacteur biologique séquentiel à l'aide d'une sonde, et est maintenue entre deux valeurs seuils fixées, et est gérée par un ordinateur ou contrôleur qui en temps réel intègre les mesures et permet d'arrêter ou de démarrer la fourniture en air dans le réacteur.

Des mesures en ligne de la concentration ammoniacale et de la conductivité sont avantageusement prises en compte comme indicateurs de conversion de l'ammonium.

La concentration en N-NH₄ dans le réacteur peut être mesurée indirectement par la conductivité et directement par une sonde ammoniacale spécifique et le flux ammoniacal dans l'effluent à traiter par la conductivité et le débit.

De préférence, le procédé utilise les informations de différents capteurs situés :
- dans l'effluent à traiter (débit Q, conductivité X, température T, pH) pour déterminer la charge en azote à traiter et le nombre de séquences de traitement à effectuer,
- dans le réacteur biologique séquentiel (oxygène dissous O₂, conductivité X, température T, pH et concentration ammoniacale) pour contrôler le déroulement du processus biologique durant les phases d'aération et non-aération et déterminer leur durée,
- dans l'eau de rejet (conductivité X, débit Q) pour déterminer le rendement du traitement et ajuster de manière rétroactive le procédé,
ces capteurs étant reliés à un ordinateur ou contrôleur qui intègre les mesures en temps réel et permet ainsi le déroulement des cycles de traitement en mode automatique.

### Description sommaire des dessins

Sur ces dessins :
Fig.1 est une coupe verticale schématique d'une installation conforme à l'invention avec réacteur séquentiel biologique.
Fig.2 est un diagramme illustrant les variations des concentrations en N-NO₂, N-NH₄, N₂ dans le réacteur biologique en fonction du temps, selon un premier mode opératoire.
Fig.3 est un diagramme illustrant les variations de la concentration en oxygène dissous et de la conductivité en fonction du temps porté en abscisse.
Fig.4 est un diagramme illustrant les variations des concentrations en N-NO₂, N-NH₄, N-NO₃, et de la concentration en oxygène dissous, dans le réacteur biologique en fonction du temps porté en abscisse..
Fig.5 est un diagramme, semblable à celui de Fig.4, illustrant les variations des concentrations en N-NO₂, N-NH₄, N-NO₃ en fonction du temps, et du ratio Nitrite/ammonium dans le réacteur biologique en fonction du temps.
Fig.6 est un diagramme, semblable à celui de Fig.2, illustrant les variations des concentrations en N-NO₂, N-NH₄, N₂ dans le réacteur biologique en fonction du temps, selon un deuxième mode opératoire.
Fig.7 est un diagramme illustrant les variations des concentrations en N-NO₂, N-NH₄, N-NO₃, ainsi que les variations de la conductivité dans le réacteur biologique en fonction du temps, selon le deuxième mode opératoire.
Fig. 8 est un diagramme illustrant, pour un exemple de réalisation, les variations des concentrations en azote en mg/L (N-NH₄ entrée, N-NO₂ sortie, N-NH₄ sortie, et N-NO₃ sortie) portées en ordonnée, en fonction du temps exprimé en jours, porté en abscisse, et
Fig. 9 est un diagramme illustrant, pour le même exemple que Fig.8, la variation de la concentration en azote (en mg/L) portée sur l'axe des ordonnées situé à gauche, et du rendement d'élimination de l'azote (en %) porté sur l'axe des ordonnées situé à droite, en fonction du temps exprimé en jours, porté en abscisse.

### Description détaillée de l'invention

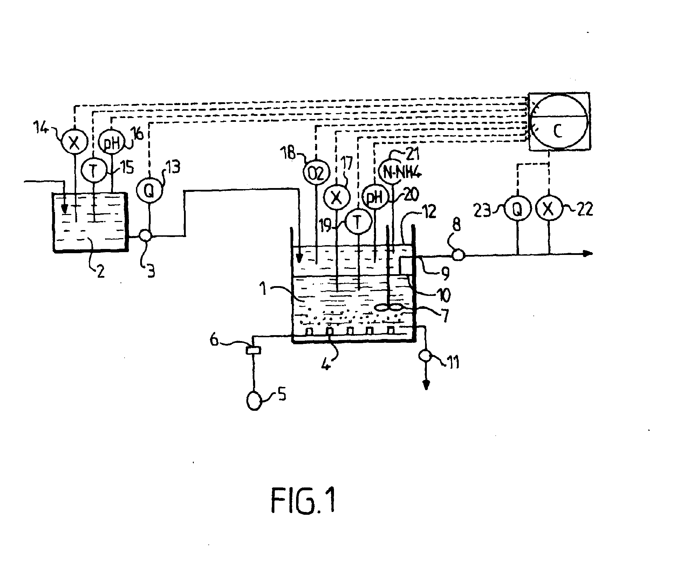

En se reportant à Fig.1 des dessins, on peut voir que l'installation de traitement de l'ammonium par nitritation et déammonification comprend un réacteur biologique séquentiel 1, sous forme d'un bassin, avec en amont un bassin tampon 2 dans lequel est stocké, si nécessaire, l'effluent à traiter.

L'installation comprend également un ensemble d'équipements, associés au réacteur 1 et au bassin 2, décrits ci-après :
- un dispositif d'alimentation 3 du réacteur biologique en effluent, notamment sous forme d'une pompe dont l'aspiration est reliée à la partie inférieure du bassin 2 et dont le refoulement débite dans une conduite débouchant dans le réacteur 1 ;
- des moyens d'aération 4, notamment formés par des buses, placés au fond du réacteur 1 et reliés à une source d'air sous pression 5 par l'intermédiaire d'une électrovanne 6,
- au moins un moyen d'agitation mécanique 7, dans le réacteur 1 ;
- un système d'évacuation d'eau traitée, à partir du réacteur 1, constitué notamment d'une pompe 8 et d'une conduite 9 formant tube plongeur jusqu'à un niveau 10 dans le réacteur 1 ;
- et un système d'extraction de boues en excès, si nécessaire, à l'aide d'une pompe 11 dont l'aspiration est reliée à la partie inférieure du réacteur 1 et dont le refoulement débite dans une conduite de rejet.

Dans le réacteur 1 les fractions d'effluent à traiter sont délivrées de manière successive à l'aide du dispositif 3. Elles s'ajoutent au volume biologique du réacteur défini par le niveau minimal 10 jusqu'à atteindre un niveau maximal 12. Le volume hydraulique admis au cours d'un cycle de traitement détermine la capacité maximale du réacteur ; ce volume est compris entre le niveau minimum 10 et le niveau maximum 12.

Après la réalisation de différentes séquences (sous-cycles) de traitement et d'une étape de décantation, la vidange de l'eau traitée est réalisée, grâce au système d'évacuation dédié, du niveau 12 jusqu'au niveau 10. Les boues produites en excès sont évacuées, si nécessaire, à la fin du cycle de traitement à l'aide du système dédié 8 et 9.

Le procédé utilise les informations de différents capteurs situés :
- dans l'effluent à traiter: capteur 13 pour le débit Q ; capteur 14 pour la conductivité X ; capteur 15 pour la température T ; capteur 16 pour le pH, afin de déterminer la charge en azote à traiter et le nombre de séquences de traitement à effectuer,
- dans le réacteur biologique séquentiel : capteur 17 pour la conductivité X ; capteur 18 pour l'oxygène dissous O₂ ; capteur 19 pour la température T; capteur 20 pour le pH et capteur 21 pour la concentration ammoniacale, afin de contrôler le déroulement du processus biologique durant les phases d'aération et non aération et de déterminer leur durée,
- dans l'eau de rejet : capteur 22 pour la conductivité X ; capteur 23 pour le débit Q,
pour déterminer le rendement du traitement et ajuster de manière rétroactive le procédé.

Ces capteurs sont reliés à un ordinateur ou contrôleur C qui intègre les mesures en temps réel et permet ainsi le déroulement des cycles de traitement en mode automatique.

Comme exposé précédemment, la réaction de déammonification met en oeuvre des bactéries spécifiques à faible taux de croissance et nécessite des conditions particulières pour avoir lieu. Ainsi, l'étape préliminaire de nitritation est importante pour le maintien du traitement par déammonification car elle détermine la proportion de deux substrats de la réaction, l'ammonium et les nitrites.

L'invention propose un système alliant un réacteur biologique 1 capable de maintenir la biomasse pour limiter au maximum les pertes d'activité par lessivage des boues, et un système de gestion robuste pour fiabiliser le traitement.

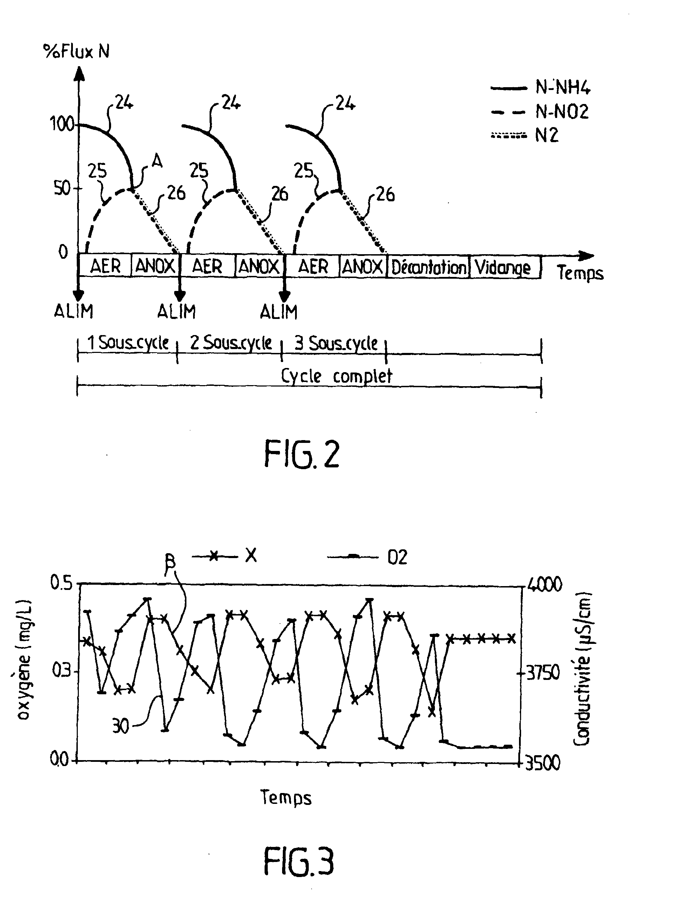

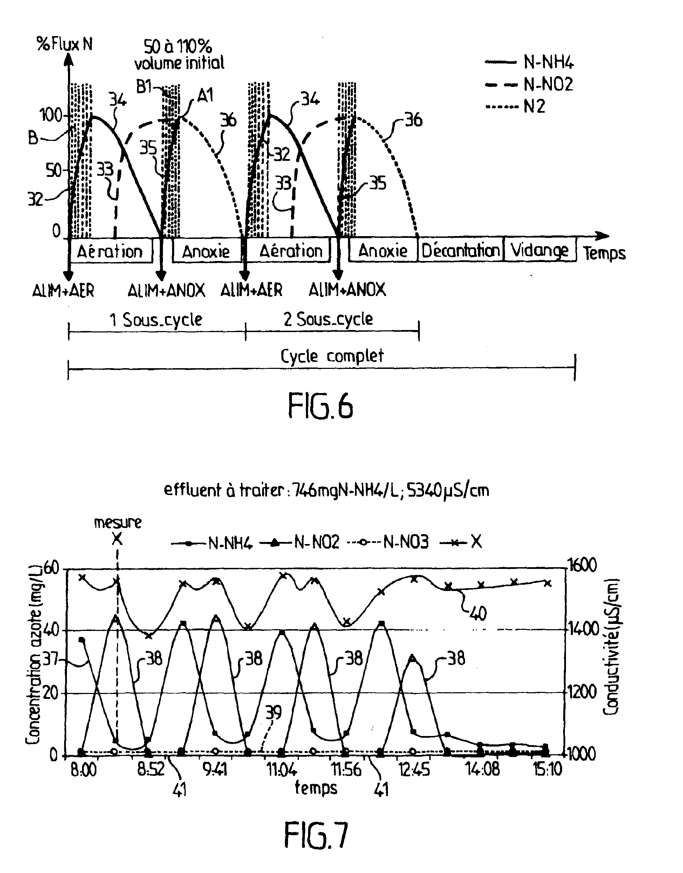

Selon l'invention, le traitement de l'ammonium réalisé dans le réacteur biologique séquentiel 1 est effectué suivant un cycle de traitement (Fig. 2 et 6) fractionné en plusieurs sous-cycles d'alimentation/aération/anoxie. Sur les Fig.2 et 6 des dessins, les phases de chaque sous-cycle sont indiquées par des mentions complètes ou des sigles : ALIM (pour alimentation), AER (pour aération), ANOX (pour anoxie). Le nombre et la durée des sous-cycles sont ajustés grâce à une série de mesures en temps réel (conductivité, oxygène dissous, débit, pH) dans l'effluent à traiter, dans le réacteur et dans le rejet. Le nombre de sous-cycles varie couramment entre 2 et 8 par cycle.

Chaque cycle se termine par une phase de décantation, suivie d'une phase de vidange.

Cette gestion permet, en particulier, d'éviter des phénomènes d'inhibition des bactéries Anammox qui seraient dus à une forte concentration en nitrites, tout en permettant d'établir des conditions de maintien stable du ratio (N-NO₂: N-NH₄).

Le volume d'effluent à traiter dans un cycle de traitement, dont la durée est comprise entre 4 et 8 heures, est versé dans le réacteur contenant la biomasse épuratrice par fractions volumiques successives de manière à exercer une pression de sélection favorable au développement et à l'activité des bactéries nitritantes. Le volume d'effluent introduit est déterminé selon la charge à traiter, calculée en fonction du débit Q et de la conductivité X de l'effluent. Le temps d'alimentation en effluent à traiter ne représente que 7 à 10% de la durée totale du cycle de traitement.

### Premier mode opératoire

Selon un premier mode opératoire, le traitement se déroule de la manière suivante.

Au cours de la première étape aérée d'un sous-cycle, pendant laquelle a lieu l'oxydation en nitrites, une partie seulement du flux en ammonium apporté par un volume d'effluent à traiter est oxydée en nitrites.

La gestion proposée permet d'atteindre et de maintenir stable durant cette étape aérée le ratio nitrites/ammonium nécessaire pour la déammonification. Cette gestion est illustrée sur Fig.2 où l'axe des ordonnées est gradué en pourcentage de N.

Les courbes 24 en trait plein représentent la variation de la concentration en N-NH₄, tandis que les courbes en tirets 25 représentent la variation de la concentration en N-NO₂. Lors de l'apport d'une fraction volumique dans le réacteur, la concentration en azote N est due pour 100 % à l'ammonium de sorte que la courbe 24 débute à la graduation 100 à la fin de la phase d'alimentation (ALIM) qui est effectuée avec aération. La courbe 24 est décroissante.

La courbe 25, correspondant à la proportion de N due aux nitrites NO₂, commence quelques instants après le début de l'aération, et est croissante. Les deux courbes 24 et 25 se croisent, en fin de phase d'aération, en un point A dont l'ordonnée correspond à un ratio N-NO₂:N-NH₄ compris entre 0.9 et 1.5. Selon le schéma de Fig. 2, le point A se situe environ à 50 %, c'est-à-dire à un ratio N-NO₂:N-NH₄ voisin de 1.

L'aération est alors stoppée, et débute la deuxième étape non aérée, en anoxie, au cours de laquelle l'ammonium est oxydé en utilisant les nitrites comme accepteurs d'électrons, pour donner de l'azote gazeux. La courbe 26, sensiblement rectiligne, illustre la diminution de la concentration en azote dans le réacteur 1 au cours de la phase d'anoxie, la concentration s'annulant, ou étant voisine de la valeur nulle, en fin de phase d'anoxie.

Le premier sous-cycle est alors terminé et un deuxième sous-cycle peut débuter par une alimentation avec une nouvelle fraction volumique.

Le nombre de sous-cycles peut varier entre deux et huit par cycle. Dans l'exemple de Fig.2, trois sous-cycles sont prévus.

Fig.3 est un diagramme illustrant, en fonction du temps porté en abscisse, les variations de la concentration en oxygène dissous selon une courbe 30, et les variations de la conductivité selon une courbe β. La conductivité est proportionnelle à la somme des formes azotées ioniques (ammonium, nitrites et nitrates), elle augmente avec l'état d'oxydation des composés d'azote. La conductivité varie en sens inverse de la concentration en oxygène dissous, et constitue un paramètre qui permet de bien suivre et gérer le traitement.

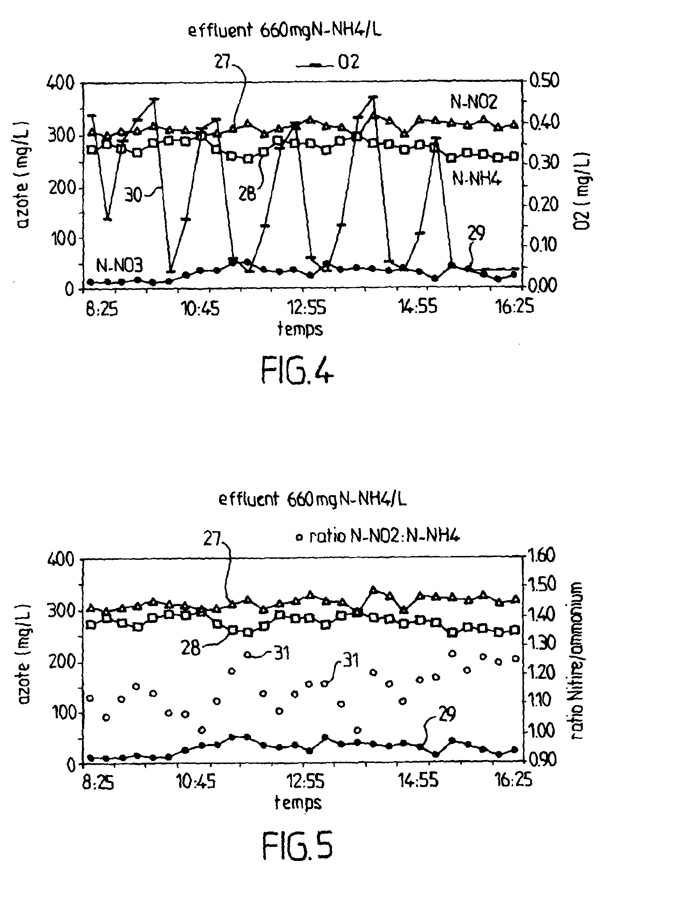

Fig. 4 est un diagramme illustrant l'oxydation partielle de l'ammonium en nitrites durant la première étape aérée ou étape de nitritation, par contrôle de l'oxygène dissous. L'exemple illustré correspond à une concentration moyenne de l'effluent de 660 mg N-NH₄/L. Le temps est porté en abscisse. En ordonnée, sur l'échelle de gauche, est portée la teneur en azote exprimée en mg/L tandis que sur l'échelle de droite est portée la teneur en oxygène dissous O₂ (exprimée en mg/L). La courbe 27 illustre l'évolution de la concentration N-NO₂, qui reste voisine de 300 mg/L. La courbe 28 représente l'évolution de la teneur en N-NH₄ qui reste comprise entre 250 et 300 mg/L. La courbe 29 illustre l'évolution de N-NO₃ dont la concentration reste faible, inférieure à 50 mg/L, ce qui montre que l'oxydation en nitrates est pratiquement inexistante.

La courbe 30 illustre les variations de la concentration en oxygène dissous. Les parties croissantes de cette courbe correspondent aux phases d'aération et les parties descendantes aux phases d'anoxie.

Fig. 5 est un diagramme semblable à celui de Fig. 4 avec en abscisse le temps et sur l'axe des ordonnées, situé à gauche, la teneur en azote exprimée en mg/L. On retrouve les courbes 27, 28 et 29 de Fig. 4. Sur l'axe des ordonnées situé à droite sont portées des valeurs du ratio N-nitrites/N-ammonium (N-NO₂:N-NH₄). Les points de mesure du ratio N-nitrites/N-ammonium sont désignés par la référence 31 et sont compris entre 1 et 1,3.

Au cours de chaque sous-cycle, l'oxydation du flux ammoniacal apporté par le volume d'eau versé dans le réacteur est contrôlée par des faibles concentrations en oxygène dissous (entre 0.1 mgO₂/L et 0.6 mgO₂/L) ce qui permet d'oxyder en nitrites seulement entre 40 et 60% de l'ammonium apporté (Fig. 2).

La concentration en oxygène, mesurée en ligne dans le réacteur biologique séquentiel 1 à l'aide de la sonde 18, est maintenue entre deux valeurs seuils fixées, et est gérée par l'ordinateur ou contrôleur C qui, en temps réel, intègre les mesures et permet d'arrêter ou de démarrer la fourniture en air dans le réacteur, par fermeture ou ouverture de la vanne 6. Des mesures en ligne de la concentration ammoniacale et de la conductivité sont prises en compte comme indicateurs de conversion de l'ammonium.

La conversion de l'ammonium et des nitrites produits en azote gazeux est réalisée dans des conditions d'anoxie stricte dans la deuxième étape de traitement. La durée de l'étape d'anoxie est contrôlée par la mesure en ligne de la conductivité X (qui diminue progressivement) dans le réacteur biologique séquentiel 1, à l'aide de la sonde spécifique 17. L'arrêt de l'étape d'anoxie se produit avant la durée prévue initialement, en fonction de la charge azotée et du rendement d'élimination de l'azote, si la valeur seuil inférieure en conductivité contrôlée par l'ordinateur C est atteinte. La concentration de boues dans le réacteur biologique séquentiel sera comprise entre 2g/L et 12 g/L et l'âge de boues entre 4 et 35 jours.

### Deuxième mode opératoire

On considère maintenant un deuxième mode opératoire possible.

Au cours de la première étape aérée de nitritation, le flux d'ammonium apporté par le volume d'effluent est complètement oxydé en nitrites.

A la fin de la première étape aérée, et au début de la deuxième étape non aérée, un apport supplémentaire en effluent ammoniacal est réalisé en proportion égale au flux des nitrites produits dans la première étape aérée. Avec un ratio nitrites:ammonium (N-N02 :N-NH4) stabilisé, l'ammonium et les nitrites sont convertis en azote gazeux dans des conditions d'anoxie stricte lors de la deuxième étape non aérée.

La concentration en oxygène dissous dans le réacteur biologique est maintenue entre 0.1 mgO₂/L et 0.6 mgO₂/L pendant l'étape d'aération. La durée de cette étape est contrôlée par la mesure en ligne de la conductivité X grâce à la sonde spécifique 17 qui permet d'intégrer la mesure et d'arrêter la fourniture en air si une valeur seuil supérieure en conductivité (traduisant un état d'oxydation élevé des composés d'azote) est atteinte avant la durée fixée.

Les fractions volumiques d'effluent à introduire en milieu non aéré sont calculées en tenant compte d'un rendement d'oxydation de l'ammonium compris entre 75% et 98% et d'un ratio N-N02 :N-NH4 à maintenir pour la déammonification entre 0.9 et 1.5. Elles représentent entre 50% et 110% du volume d'effluent initial.

La concentration en N-NH4 dans le réacteur est mesurée indirectement par la conductivité X, grâce à la sonde 17, et directement par la sonde ammoniacale spécifique 21. Le flux ammoniacal dans l'effluent à traiter est déterminé par la conductivité X, grâce à la sonde 14, et par le débit Q grâce au capteur 13.

Fig. 6 illustre, semblablement à Fig. 2, un cycle de traitement pour l'élimination de l'azote par nitritation et déammonification, selon le deuxième mode opératoire. Le flux d'ammonium apporté est complètement oxydé en nitrites lors de la première étape aérée.

Un sous-cycle comprend une première phase (alimentation + aération), représentée par une zone B, au cours de laquelle une fraction volumique du flux à traiter est introduite dans le réacteur. La courbe ascendante en trait plein 32 traduit cet apport de NH₄ jusqu'au pourcentage de 100 % avant que ne débute l'oxydation en nitrites illustrée par la courbe en tirets 33.

Le flux d'ammonium est entièrement oxydé en nitrites pendant la phase d'aération de sorte que la teneur en N-NNH₄ décroît selon la courbe 34 en trait plein jusqu'à une valeur nulle ou sensiblement nulle en fin de phase d'aération. Pendant le même temps, la courbe 33 représentant la proportion de N-NO₂ atteint sensiblement la valeur des 100 % en fin de phase d'aération.

A la fin de cette phase d'aération, et au début de la deuxième phase non aérée en anoxie, un apport supplémentaire en effluent ammoniacal dans la zone B1 du diagramme est réalisé en proportion égale au flux des nitrites produits. Cet apport est illustré par la courbe en trait plein 35 qui rejoint le sommet de la courbe 33 au point A1. L'apport supplémentaire d'effluent ammoniacal dans la zone B1 est compris entre 50 à 110 % du volume initial de la fraction volumique B selon le ratio (N-N02:N-NH4) voulu (de préférence compris entre 0.5 et 1.9).

L'apport en flux ammoniacal illustré par la courbe 35 est déterminé à partir des diverses mesures effectuées dans l'installation pour qu'à la fin de cet apport supplémentaire le rapport nitrites:ammonium (N-N02:N-NH4) soit égal à 1 ou voisin de 1.

Au cours de la phase suivante d'anoxie, la concentration en azote, du fait de l'oxydation de l'ammonium à partir des nitrites, diminue jusqu'à s'annuler, comme illustré par la courbe 36 en pointillés.

Le sous-cycle se termine lorsque la courbe 36 arrive à l'axe des abscisses. Un deuxième sous-cycle est lancé par l'introduction d'une nouvelle fraction volumique et la mise en marche de l'aération.

Le cycle complet de traitement d'effluent comprend au moins deux sous-cycles et de préférence moins de huit sous-cycles. Selon l'exemple de Fig.6, trois sous-cycles sont prévus.

Fig. 7 est un diagramme illustrant la gestion des phases d'aération par mesure de conductivité lors du traitement de l'azote par nitritation et déammonification dans un réacteur biologique séquentiel 1. Le temps, exprimé en heures et minutes, est porté en abscisse tandis qu'en ordonnée, sur l'axe situé à gauche, sont portées les concentrations en azote exprimées en mg/L et sur l'axe situé à droite est portée la conductivité exprimée en microsiemens/cm (µS/cm). Le diagramme de Fig. 7 correspond à un effluent à traiter contenant 746 mg N-NH₄/L et présentant une conductivité de 5340 µS/cm.

La courbe 37 illustre les variations de la concentration en N-NH₄. La succession de courbes 38 illustre les variations de la concentration en N-NO₂. La courbe 39 illustre les variations de la concentration en N-NO₃ et fait apparaître que la présence de nitrates est négligeable. La courbe 40 illustre les variations de la conductivité mesurée à différents instants pour lesquels N-NH₄ et N-NO₂ sont également mesurés ; les résultats de mesure figurent sous forme de points situés sur une même verticale.

Chaque courbe 38 comporte une partie gauche montante, qui correspond à la phase d'aération et à la courbe 33 de Fig. 6, illustrant l'oxydation de l'ammonium en nitrites. La concentration en N-NH4 diminue, ce qui correspond à la partie décroissante de la courbe 37. La courbe de conductivité 40 passe par un maximum relatif correspondant au maximum de la courbe 38. D'une manière générale, la conductivité traduit l'état d'oxydation de l'ammonium, la conductivité augmentant ou diminuant selon l'augmentation ou la diminution de l'état d'oxydation.

La partie droite descendante de chaque courbe 38 correspond à la phase anoxie et à la courbe 36, avec dégagement d'azote gazeux. Les segments 41 de l'axe des abscisses séparant deux courbes 38 correspondent à l'introduction de la fraction volumique supplémentaire illustrée par la courbe 35 sur Fig. 6. Les parties extrêmes des courbes 37 et 40 situées sur la droite du diagramme de Fig. 7 correspondent aux phases de décantation et de vidange de Fig. 6.

Un exemple des résultats obtenus en appliquant les dispositions de cette demande de brevet est donné ci-après.

Les conditions de fonctionnement du réacteur sont décrites ci-dessous.

| Volume utile du réacteur | 4.1 m3 |
|---|---|
| Phase d'alimentation en centrat | 7.5 % du cycle |
| Phase d'aération | 32% du cycle |
| Phase de dé-ammonification | 45% du cycle |
| Concentration moyenne en oxygène pendant l'aération | 0.55 mg/L |
| Concentration moyenne en ammonium dans l'effluent à traiter | 410 mg/L |
| Conductivité moyenne de l'effluent à traiter | 3850 µS/cm |

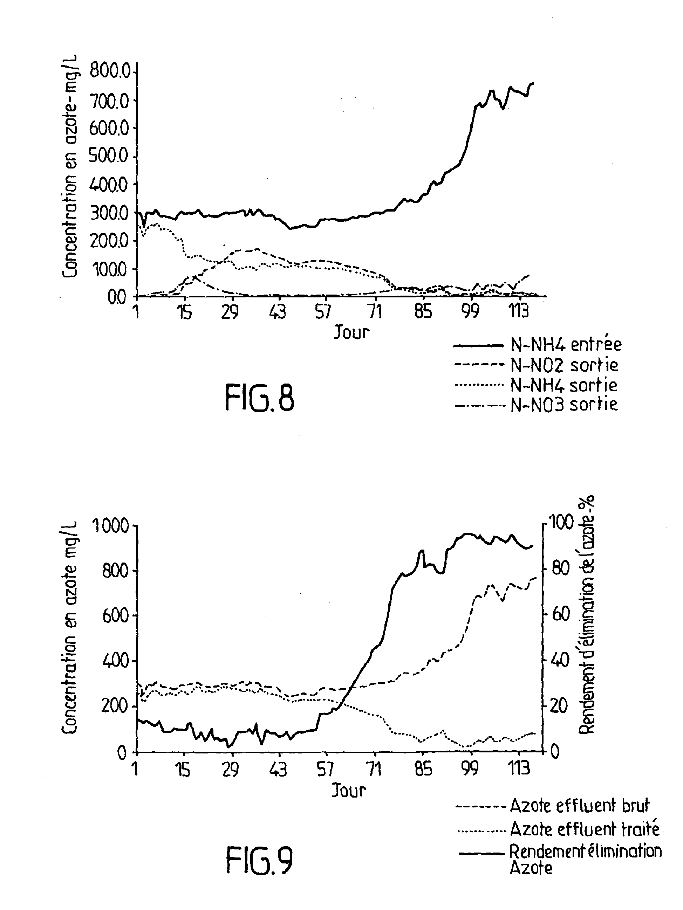

Les résultats de l'application du procédé sont présentés sous forme de graphiques (diagrammes) sur les Fig. 8 et 9.

Les concentrations en ammonium en entrée et sortie du procédé ainsi que celles en nitrites et nitrates sont présentées, en fonction du temps.

A l'issue du premier mois de fonctionnement, on remarque la disparition totale des nitrates et l'accumulation des nitrites dans l'effluent de sortie du réacteur. Le ratio N02/NH4 est de l'ordre de 1.2 en fin de phase aérée.

Après deux mois et demi de traitement, l'activité de dé-ammonification apparaît et permet d'éliminer une partie des nitrites produits. En trois mois, l'activité de dé-ammonification permet de traiter la totalité du flux de nitrites produits en phase aérée. La robustesse du produit a par ailleurs permis, pendant cette période d'installation de l'activité de dé-ammonification d'augmenter la concentration en ammonium à traiter de 350 mg/L à 750 mg/L en moins d'un mois (Fig. 8).

Le rendement d'élimination de l'azote par nitrification/dé-ammonification atteint 95% en un mois et demi. Les nitrates, produits finaux de la réaction de déammonification représentent 90% de l'azote contenu dans l'effluent traité (Fig. 9).

Les conditions décrites dans la demande de brevet permettent d'obtenir dans un délai court (trois mois) un rendement de dé-ammonification de 95% sans apport de biomasse externe alors que les informations disponibles sur l'état de la technique *[*Startup of reactors for anoxie ammonium oxidation : experiences from the first full-scale anammox reactor in Rotterdam. W.R.L. van der Star, W.R. Abma, D. Blommers, J-W Mulder, T. Tokutomi, M. Strous, C. Piciorenu, M.C.M. van Loosdrecht. Water Research 41 (2007) 4149-4163*.] et [(*Treatment of sludge return liquors : experiences from the operation of full-scale plants. N. Jardin, D. Thöle, B. Wett.) Weftec (2006*)]* indiquent un démarrage en au moins six mois avec apport important de biomasse provenant d'un autre réacteur de dé-ammonification (apport cumulé jusqu'à 24%).

## Revendications

1. Procédé de traitement d'effluents contenant de l'azote sous forme d'ammonium, mettant en oeuvre un réacteur biologique séquentiel (1), selon lequel :
- un volume d'effluent à traiter dans un cycle complet est introduit par fractions volumiques successives dans le réacteur biologique, chaque fraction volumique étant traitée au cours d'un sous-cycle, l'introduction successive des fractions volumiques permettant d'exercer une pression de sélection bactérienne favorable au développement et à l'activité des bactéries nitritantes par des à-coups de charge ammoniacale,
- chaque sous-cycle comprend une phase d'alimentation par une fraction volumique et, de manière alternée, deux étapes de traitement, à savoir :
- une première étape aérée, au cours de laquelle a lieu une oxydation totale ou partielle de l'ammonium en nitrites,
- suivie d'une deuxième étape non aérée, en anoxie, au cours de laquelle les nitrites produits et l'ammonium sont convertis en azote gazeux,
**caractérisé en ce que** :
- pendant la première étape aérée la concentration en oxygène dissous dans le réacteur biologique est maintenue entre 0.1 mgO₂/L et 0.6 mgO₂/L,
- le rapport N-NO₂ : N-NH₄ est ajusté pour être compris entre 0.9 et 1.5 au début de l'étape non aérée,
- et l'étape non aérée est réalisée par déammonification, sans apport de substrat carboné.

2. Procédé selon la revendication 1, **caractérisé en ce que** la première étape aérée est régulée en fonction au moins de la conductivité (X) mesurée dans le réacteur biologique.

3. Procédé selon la revendication 2, **caractérisé en ce que** la première étape aérée est régulée en fonction également de la concentration en oxygène dissous mesurée dans le réacteur biologique.

4. Procédé selon l'une quelconque des revendications précédentes, **caractérisé en ce que** pendant la première étape aérée la concentration en oxygène dissous est maintenue entre deux valeurs seuils par arrêt ou mise en marche de la fourniture d'air dans le réacteur biologique.

5. Procédé selon l'une quelconque des revendications précédentes, **caractérisé en ce que** la durée de la première étape aérée est contrôlée par la mesure de la conductivité (X) dans le réacteur biologique, et la fourniture en air est arrêtée si une valeur seuil (limite supérieure) en conductivité est atteinte avant une durée fixée.

6. Procédé selon l'une quelconque des revendications précédentes, **caractérisé en ce que** dans la première étape une partie seulement du flux en ammonium apporté par un volume d'effluent à traiter est transformée en nitrites, la partie restante du flux en ammonium étant suffisante pour que, dans la deuxième étape non aérée, les nitrites produits et l'ammonium non oxydé lors de la première étape soient convertis en azote gazeux.

7. Procédé selon la revendication 6, **caractérisé en ce que** la partie du flux en ammonium transformée en nitrites à la fin de la première étape aérée est comprise entre 40 et 60% du flux apporté.

8. Procédé selon l'une quelconque des revendications 1 à 5, **caractérisé en ce que**, au cours de la première étape aérée, le flux d'ammonium apporté par un volume d'effluent à traiter est complètement oxydé en nitrites, et qu'au début de la deuxième étape non aérée, un apport supplémentaire en effluent à traiter contenant de l'ammonium est réalisé en proportion du flux de nitrites produits dans la première étape aérée pour que le ratio N-NO₂ :N-NH₄ soit compris entre 0.9 et 1.5.

9. Procédé selon la revendication 8, **caractérisé en ce que** l'apport supplémentaire en effluent ammoniacal est réalisé en proportion sensiblement égale au flux des nitrites produits, de sorte que le ratio N-NO₂:N-NH4 soit sensiblement égal à 1.

10. Procédé selon la revendication 8 ou 9, **caractérisé en ce que** l'apport supplémentaire en effluent ammoniacal à introduire au début de la deuxième étape non aérée est déterminé en tenant compte d'un rendement d'oxydation de l'ammonium compris entre 75% et 98% et d'un ratio N-N02 :N-NH4 à maintenir pour la déammonification entre 0.9 et 1.5.

11. Procédé selon l'une quelconque des revendications 8 à 10, **caractérisé en ce que** l'apport supplémentaire en effluent à introduire au début de la deuxième étape non aérée représente entre 50% et 110% du volume d'effluent initial.

12. Procédé selon l'une quelconque des revendications précédentes, **caractérisé en ce que** le temps d'alimentation en effluent à traiter représente 7 à 10 % de la durée totale du cycle de traitement.

13. Procédé selon l'une quelconque des revendications précédentes, **caractérisé en ce que** le nombre et la durée des sous-cycles et des phases des sous-cycles sont ajustés grâce à une série de mesures en temps réel du débit, de l'oxygène dissous, de la conductivité et du pH dans l'effluent à traiter, dans le réacteur biologique et dans le rejet.

14. Procédé selon l'une quelconque des revendications précédentes, **caractérisé en ce que** le nombre le nombre de sous-cycles est compris entre 2 et 8 par cycle.

15. Procédé selon l'une quelconque des revendications précédentes, **caractérisé en ce que** la durée d'un cycle de traitement est comprise entre 4 et 8 heures.

16. Procédé selon la revendication 3, **caractérisé en ce que** la concentration en oxygène est mesurée en ligne dans le réacteur biologique séquentiel (1) à l'aide d'une sonde (18), et est maintenue entre deux valeurs seuils fixées, et est gérée par un ordinateur ou contrôleur (C) qui en temps réel intègre les mesures et permet d'arrêter ou de démarrer la fourniture en air dans le réacteur.

17. Procédé selon la revendication 16, **caractérisé en ce que** des mesures en ligne de la concentration ammoniacale et de la conductivité sont prises en compte comme indicateurs de conversion de l'ammonium.

18. Procédé selon la revendication 17, **caractérisé en ce que** la concentration en N-NH₄ dans le réacteur (1) est mesurée indirectement par la conductivité (X) et directement par une sonde ammoniacale spécifique et le flux ammoniacal dans l'effluent à traiter par la conductivité (X) et le débit (Q).

19. Procédé selon l'une quelconque des revendications précédentes, **caractérisé en ce qu'**il utilise les informations de différents capteurs situés :
- dans l'effluent à traiter (débit Q, conductivité X, température T, pH) pour déterminer la charge en azote à traiter et le nombre de séquences de traitement à effectuer,
- dans le réacteur biologique séquentiel (oxygène dissous O₂, conductivité X, température T, pH et concentration ammoniacale) pour contrôler le déroulement du processus biologique durant les phases d'aération et non-aération et déterminer leur durée,
- dans l'eau de rejet (conductivité X, débit Q) pour déterminer le rendement du traitement et ajuster de manière rétroactive le procédé,
ces capteurs étant reliés à un ordinateur ou contrôleur (C) qui intègre les mesures en temps réel et permet ainsi le déroulement des cycles de traitement en mode automatique.

## Patentansprüche

1. Verfahren zur Behandlung von Stickstoff in Form von Ammonium enthaltenden Abwässern unter Verwendung eines sequentiell beschickten Bioreaktors (1), bei welchem:
- eine in einem vollständigen Zyklus zu behandelnde Menge Abwasser in aufeinanderfolgenden Volumenanteilen in den Bioreaktor eingebracht wird, wobei jeder Volumenanteil im Verlauf eines Subzyklus behandelt wird, wobei das aufeinanderfolgende Einbringen der Volumenanteile es ermöglicht, einen Bakterien-Selektionsdruck, welcher für die Entwicklung und die Aktivität der Nitritbakterien vorteilhaft ist, durch stoßweise Ammoniakbeschickung auszuüben,
- jeder Subzyklus eine Phase der Zufuhr eines Volumenanteils und, abwechselnd, zwei Behandlungsschritte aufweist, nämlich:
- einen ersten, belüfteten Schritt, in dessen Verlauf eine vollständige oder teilweise Oxidation des Ammonium zu Nitriten erfolgt,
- gefolgt von einem zweiten, nicht belüfteten Schritt unter Sauerstoffentzug, in dessen Verlauf die produzierten Nitrite und das Ammonium in gasförmigen Stickstoff umgewandelt werden,
**dadurch gekennzeichnet, dass**:
- während des ersten, belüfteten Schritts die Konzentration an gelöstem Sauerstoff in dem Bioreaktor zwischen 0,1 mgO₂/L und 0,6mgO₂/L gehalten wird,
- das Verhältnis N-NO₂ : N-NH₄ so eingestellt wird, dass es zu Beginn des nicht belüfteten Schritts zwischen 0,9 und 1,5 beträgt,
- und der nicht belüftete Schritt durch Deammonifikation ohne Zufuhr eines kohlenstoffhaltigen Substrats erfolgt.

2. Verfahren nach Anspruch 1, **dadurch gekennzeichnet, dass** der erste, belüftete Schritt in Abhängigkeit von zumindest der in dem Bioreaktor gemessenen Leitfähigkeit (X) geregelt wird.

3. Verfahren nach Anspruch 2, **dadurch gekennzeichnet, dass** der erste, belüftete Schritt ebenfalls in Abhängigkeit von der Konzentration an gelöstem Sauerstoff in dem Bioreaktor geregelt wird.

4. Verfahren nach einem der vorhergehenden Ansprüche, **dadurch gekennzeichnet, dass** während des ersten, belüfteten Schritts die Konzentration an gelöstem Sauerstoff durch Anhalten oder Betreiben der Luftzufuhr in den Bioreaktor zwischen zwei Schwellenwerten gehalten wird.

5. Verfahren nach einem der vorhergehenden Ansprüche, **dadurch gekennzeichnet, dass** die Dauer des ersten, belüfteten Schritts anhand des Maßes der Leitfähigkeit (X) in dem Bioreaktor gesteuert wird, und dass die Luftzufuhr angehalten wird, wenn ein oberer Schwellenwert (Obergrenze) der Leitfähigkeit vor einer festgelegten Dauer erreicht wird.

6. Verfahren nach einem der vorhergehenden Ansprüche, **dadurch gekennzeichnet, dass** in dem ersten Schritt lediglich ein Teil des durch ein Volumen des zu behandelnden Abwassers eingebrachten Ammoniumstroms in Nitrite umgewandelt wird, wobei der verbleibende Teil des Ammoniumstroms ausreicht, um im zweiten, nicht belüfteten Schritt die produzierten Nitrite und das im ersten Schritt nicht oxidierte Ammonium in gasförmigen Stickstoff umzuwandeln.

7. Verfahren nach Anspruch 6, **dadurch gekennzeichnet, dass** der am Ende des ersten, belüfteten Schritts in Nitrite umgewandelte Teil des Ammoniumstroms zwischen 40 und 60% des eingebrachten Stroms beträgt.

8. Verfahren nach einem der Ansprüche 1 bis 5, **dadurch gekennzeichnet, dass** im Verlauf des ersten, belüfteten Schritts, der durch ein Volumen des zu behandelnden Abwassers eingebrachte Ammoniumstrom vollständig zu Nitriten oxydiert wird, und dass zu Beginn des zweiten, nicht belüfteten Schritts ein zusätzlicher Eintrag von zu behandelndem Abwasser, welches Ammonium enthält, im Verhältnis zu dem Strom der in dem ersten, belüfteten Schritt erzeugten Nitrite erfolgt, damit das Verhältnis N-NO₂ : N-NH₄ zwischen 0,9 und 1,5 beträgt.

9. Verfahren nach Anspruch 8, **dadurch gekennzeichnet, dass** der zusätzliche Eintrag an ammoniakalischen Abwässern in einem Verhältnis, das im Wesentlichen gleich dem Strom der erzeugten Nitrite ist, derart durchgeführt wird, dass das Verhältnis N-NO₂ : N-NH₄ im Wesentlichen gleich 1 ist.

10. Verfahren nach Anspruch 8 oder 9, **dadurch gekennzeichnet, dass** der zu Beginn des zweiten, nicht belüfteten Schritt einzuleitende zusätzliche Eintrag an ammoniakalischen Abwässern unter Berücksichtigung einer Ammoniumoxydationsleistung zwischen 75% und 98% und eines für die Deammonifikation beizubehaltenden Verhältnisses N-NO₂ : N-NH₄ zwischen 0,9 und 1,5 bestimmt wird.

11. Verfahren nach einem der Ansprüche 8 bis 10, **dadurch gekennzeichnet, dass** der zu Beginn des zweiten, nicht belüfteten Schritt einzuleitende zusätzliche Eintrag an Abwässern zwischen 50% und 110% des Ausgangsvolumens des Abwassers ausmacht.

12. Verfahren nach einem der vorhergehenden Ansprüche, **dadurch gekennzeichnet, dass** die Dauer der Zufuhr zu behandelnden Abwassers zwischen 7 und 10% der Gesamtdauer des Behandlungszyklus beträgt.

13. Verfahren nach einem der vorhergehenden Ansprüche, **dadurch gekennzeichnet, dass** die Anzahl und die Dauer der Subzyklen und Phasen der Subzyklen anhand einer Reihe von Echtzeitmessungen des Durchsatzes, des gelösten Sauerstoffs, der Leitfähigkeit und des pH-Werts des zu behandelnden Abwassers in dem Bioreaktor und dem Ausfluss eingestellt werden.

14. Verfahren nach einem der vorhergehenden Ansprüche, **dadurch gekennzeichnet, dass** die Anzahl der Subzyklen zwischen 2 und 8 pro Zyklus beträgt.

15. Verfahren nach einem der vorhergehenden Ansprüche, **dadurch gekennzeichnet, dass** die Dauer eines Behandlungszyklus zwischen 4 und 8 Stunden beträgt.

16. Verfahren nach Anspruch 3, **dadurch gekennzeichnet, dass** die Sauerstoffkonzentration in dem sequentiell beschickten Bioreaktor (1) mittels einer Sonde (18) online gemessen wird und zwischen zwei festgelegten Schwellenwerten gehalten wird und durch einen Rechner oder einen Controller (C) verwaltet wird, welcher die Messungen in Echtzeit integriert und das Anhalten oder Starten der Luftzufuhr in den Reaktor ermöglicht.

17. Verfahren nach Anspruch 16, **dadurch gekennzeichnet, dass** die Online-Messungen der Ammoniak-Konzentration und der Leitfähigkeit als Indikatoren der Umwandlung des Ammoniums berücksichtig werden.

18. Verfahren nach Anspruch 17, **dadurch gekennzeichnet, dass** die Konzentration von N-NH₄ in dem Reaktor (1) indirekt über die Leitfähigkeit (X) und direkt mittels einer spezifischen Ammoniaksonde und den Ammoniakstrom in dem zu behandelnden Abwasser über die Leitfähigkeit (X) und den Durchsatz (Q) gemessen wird.

19. Verfahren nach einem der vorhergehenden Ansprüche, **dadurch gekennzeichnet, dass** es Informationen von verschiedenen Sensoren verwendet, welche angeordnet sind:
- in dem zu behandelnden Abwasser (Durchsatz Q, Leitfähigkeit X, Temperatur T, pH-Wert), um die zu behandelnde Stickstoffbelastung und die Anzahl durchzuführenden Behandlungssequenzen zu bestimmen,
- in dem sequentiell beschickten Bioreaktor (gelöster Sauerstoff O₂, Leitfähigkeit X, Temperatur T, pH-Wert und Ammoniakkonzentration), um den Ablauf des biologischen Prozesses während der belüfteten und der nicht-belüfteten Phasen zu kontrollieren und deren Dauer zu bestimmen,
- im Ausflusswasser (Leitfähigkeit X, Durchsatz Q), um die Behandlungswirkungsrad zu bestimmen und das Verfahren retroaktiv einzustellen,
wobei diese Sensoren mit einem Rechner oder Controller (C) verbunden sind, welcher die Messungen in Echtzeit integriert und so den automatischen Ablauf der Behandlungszyklen ermöglicht.

## Claims

1. A method for the treatment of effluents containing nitrogen in the form of ammonium, using a sequencing batch reactor (1), according to which:
- a volume of effluent to be treated in a complete cycle is introduced into the batch reactor in successive volume fractions, each volume fraction being treated during a subcycle, the successive introduction of the volume fractions making it possible to exert a bacterial selection pressure favorable to the development and to the activity of nitriting bacteria by means of ammoniacal single-shots,
- each subcycle comprises a phase of feeding with a volume fraction and, in an alternating manner, two treatment stages, i.e.:
- an aerated first stage, during which complete or partial oxidation of the ammonium so as to give nitrites takes place,
- followed by a nonaerated second stage, under anoxic conditions, during which the nitrites produced and the ammonium are converted to nitrogen gas,
**characterized in that**:
- during the aerated first stage, the dissolved oxygen concentration in the batch reactor is maintained between 0.1 mgO₂/l and 0.6 mgO₂/l,
- the N-NO₂:N-NH₄ ratio is adjusted so as to be between 0.9 and 1.5 at the beginning of the nonaerated stage,
- and the nonaerated stage is carried out by deammonification, without the provision of a carbon-based substrate.

2. The method as claimed in claim 1, **characterized in that** the aerated first stage is regulated according to at least the conductivity (X) measured in the batch reactor.

3. The method as claimed in claim 2, **characterized in that** the aerated first stage is regulated according to, in addition, the dissolved oxygen concentration measured in the batch reactor.

4. The method as claimed in any one of the preceding claims, **characterized in that**, during the aerated first stage, the dissolved oxygen concentration is maintained between two threshold values by interrupting or turning on the air supply in the batch reactor.

5. The method as claimed in any one of the preceding claims, **characterized in that** the duration of the aerated first stage is controlled by measuring the conductivity (X) in the batch reactor, and the air supply is interrupted if a conductivity threshold value (upper limit) is reached before a set period of time.

6. The method as claimed in any one of the preceding claims, **characterized in that**, in the first stage, only part of the ammonium stream provided by a volume of effluent to be treated is converted to nitrites, the remaining part of the ammonium stream being sufficient for, in the nonaerated second stage, the nitrites produced and the ammonium not oxidized during the first stage to be converted to nitrogen gas.

7. The method as claimed in claim 6, **characterized in that** the part of the ammonium stream converted to nitrites at the end of the aerated first stage is between 40% and 60% of the stream provided.

8. The method as claimed in any one of claims 1 to 5, **characterized in that**, during the aerated first stage, the ammonium stream provided by a volume of effluent to be treated is completely oxidized so as to give nitrites, and **in that**, at the beginning of the nonaerated second stage, an additional provision of effluent to be treated, containing ammonium, is carried out in proportion to the stream of nitrites produced in the aerated first stage such that the N-NO₂:N-NH₄ ratio is between 0.9 and 1.5.

9. The method as claimed in claim 8, **characterized in that** the additional provision of ammoniacal effluent is carried out in a proportion substantially equal to the stream of nitrites produced, such that the N-NO₂:N-NH₄ ratio is substantially equal to 1.

10. The method as claimed in claim 8 or 9, **characterized in that** the additional provision of ammoniacal effluent to be introduced at the beginning of the nonaerated second stage is determined by taking into account an ammonium oxidation yield of between 75% and 98% and an N-NO₂:N-NH₄ ratio to be maintained for the deammonification, of between 0.9 and 1.5.

11. The method as claimed in any one of claims 8 to 10, **characterized in that** the additional provision of effluent to be introduced at the beginning of the nonaerated second stage represents between 50% and 110% of the initial effluent volume.

12. The method as claimed in any one of the preceding claims, **characterized in that** the time for feeding with effluent to be treated represents 7% to 10% of the total duration of the treatment cycle.

13. The method as claimed in any one of the preceding claims, **characterized in that** the number and the duration of the subcycles and of the phases of the subcycles are adjusted by virtue of a series of realtime measurements of the flow rate, of the dissolved oxygen, of the conductivity and of the pH in the effluent to be treated, in the batch reactor and in the waste.

14. The method as claimed in any one of the preceding claims, **characterized in that** the number of subcycles is between 2 and 8 per cycle.

15. The method as claimed in any one of the preceding claims, **characterized in that** the duration of a treatment cycle is between 4 and 8 hours.

16. The method as claimed in claim 3, **characterized in that** the oxygen concentration is measured on-line in the sequencing batch reactor (1) by means of a probe (18), and is maintained between two set threshold values, and is managed by a computer or controlling device (C) which, in real time, integrates the measurements and makes it possible to interrupt or initiate the air supply in the reactor.

17. The method as claimed in claim 16, **characterized in that** on-line measurements of the ammoniacal concentration and of the conductivity are taken into account as ammonium conversion indicators.

18. The method as claimed in claim 17, **characterized in that** the N-NH₄ concentration in the reactor (1) is measured indirectly by means of the conductivity (X) and directly by means of a specific ammoniacal probe, and the ammoniacal stream in the effluent to be treated, by means of the conductivity (X) and the flow rate (Q).

19. The method as claimed in any one of the preceding claims, **characterized in that** it uses the information from various sensors located:
- in the effluent to be treated (flow rate Q, conductivity X, temperature T, pH) for determining the load of nitrogen to be treated and the number of treatment sequences to be carried out,
- in the sequencing batch reactor (dissolved oxygen O₂, conductivity X, temperature T, pH and ammoniacal concentration) for controlling the course of the batch process during the aeration and nonaeration phases and determining the duration thereof,
- in the waste water (conductivity X, flow rate Q) for determining the treatment yield and retroactively adjusting the method,
these sensors being connected to a computer or controlling device (C) which integrates the measurements in real time and thus allows the treatment cycles to proceed in automatic mode.
